# EUROPÄISCHE PATENTSCHRIFT

(11) **EP 1 802 497 B1**
(45) Veröffentlichungstag und Bekanntmachung des Hinweises auf die Patenterteilung: **25.03.2009**
(21) Anmeldenummer: 05794739.2
(22) Anmeldetag: 28.09.2005
(51) Int. Cl.: B60S 1/38

(54) **WISCHBLATT**
WIPER BLADE
RACLETTE D'ESSUIE-GLACE

(30) Priorität: 14.10.2004 DE 102004050163
(43) Veröffentlichungstag der Anmeldung: 04.07.2007
(73) Patentinhaber: ROBERT BOSCH GMBH, 70442 Stuttgart (DE); Volkswagen Aktiengesellschaft, 38436 Wolfsburg (DE)
(72) Erfinder: DIETRICH, Jan, 77815 Buehl (DE); FANGMEIER, Wilhelm, 38442 Wolfsburg (DE)
(86) Internationale Anmeldenummer: PCT/EP2005/054873
(87) Internationale Veröffentlichungsnummer: WO 2006/040259

(56) Entgegenhaltungen:
- EP-A- 0 744 326
- DE-A1-5102005 009 20
- DE-B- 1 157 499
- FR-A- 1 096 321
- US-A- 3 414 930
- US-A- 3 902 216
- PATENT ABSTRACTS OF JAPAN Bd. 010, Nr. 261 (M-514), 5. September 1986 (1986-09-05) & JP 61 085245 A (NIPPON DENSO CO LTD), 30. April 1986 (1986-04-30)

## Beschreibung

### Stand der Technik

Die Erfindung betrifft ein Wischblatt nach der Gattung des unabhängigen Anspruchs. Solche Wischblätter mit einem federbandartigen Tragelement sind aus der DE-A1 197 34 843 bekannt. Dabei soll das Tragelement über das gesamte vom Wischblatt bestrichene Wischfeld eine möglichst gleichmäßige Verteilung des vom Wischerarm ausgehenden Wischblattanpressdrucks an der Scheibe gewährleisten. Durch eine entsprechende vorgebende Krümmung des unbelasteten Tragelements - also, wenn das Wischblatt nur mit seinen beiden Enden an der Scheibe anliegt, - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung, weil während des Wischbetriebs die Wischleiste, bzw. deren an der Scheibe anliegende Wischlippe, stets mit einer bestimmten Kraft gegen die Scheibe drücken muss. Das Tragelement ersetzt somit die aufwendige Tragbügelkonstruktion mit zwei in der Wischleiste angeordneten Federschienen, wie sie bei herkömmlichen Wischblättern praktiziert wird (DE-OS 15 05 397), weil das Tragelement neben der Verteilung des Anpressdrucks auch die notwendige Querversteifung der gummielastischen Wischleiste bewirkt. Bei dem herkömmlichen Wischblatt wird nämlich die von einem Wischerarm auf einen Hauptbügel ausgeübte, zur Scheibe gerichtete Auflagekraft auf zwei Krallenbügel übertragen und von diesen über vier Krallen auf die gummielastische Wischleiste verteilt.

Bei Wischblättern mit federelastischen Tragelementen weist das Tragelement eine Federelastizität in Richtung zur Fahrzeugscheibe und eine gewisse Biegesteifheit in Richtung der Wischbewegung auf. In Arbeitsstellung wird das Wischblatt in Richtung zur Fahrzeugscheibe hin durch die Anlagekraft des Wischerarms belastet, wobei die die Wischlippe an der Fahrzeugscheibe anliegt.

Beim Wischen wirkt eine durch die Schwenkbewegung erzeugte Kraft seitlich auf das Gummiprofil. Während der Wischleistenrücken durch die Seitenkraft bewegt wird, bleibt die Wischlippe zunächst in ihrer Stellung. Dabei wirkt der dünne Steg zwischen dem Wischleistenrücken und dem Umlegkeil wegen seiner hohen elastischen Verformbarkeit als Kippgelenk, sodass die Wischlippe am Umlegkeil etwa einen Anstellwinkel von 55 Grad zur Glasoberfläche einnimmt. Diese Schlepplage ist die Arbeitsstellung der Wischlippe. Der Umlegkeil ist in dieser Lage soweit umgekippt, bis er mit seiner äußeren oberen Schulter an der Unterseite des Wischleistenrückens anliegt. Infolge der oszillierenden Wischbewegung der Scheibenwischer ergeben sich Umkehrpunkte in den Endlagen der Bewegung. Hier klappt der Umlegkeil in die entgegengesetzte Richtung um und nimmt anschließend wieder eine geschleppte Arbeitslage ein. Durch diesen Umklappvorgang entsteht insbesondere bei Wischblättern mit einem federelastischen Tragelement ein störendes Umklappgeräusch. Zudem wird der Wischgummi im Bereich des Kippstegs sehr stark elastisch verformt. Dies führt im Verlaufe der Einsatzzeit zu einer permanenten Verformung des Wischgummiprofils, welches zuerst nur die Wischwirkung des Scheibenwischers beeinträchtigt, später aber sogar das Umklappen verhindern kann.

Aus der DE 9104461.8 U1 ist eine Wischleiste bekannt, bei der zwischen dem Wischleistenrücken und der anschlagenden Schulter des Umlegkeils eine Dämpfungsleiste vorgesehen ist. Wenn der Umlegkeil der Wischleiste im Umkehrpunkt umklappt, schlägt die Schulter zunächst gegen die Dämpfungsleiste und drückt diese bis zur Anlage an den Wischleistenrücken. Dadurch wird die Aufschlaggeschwindigkeit gebremst und das Geräusch beim Umklappen gedämpft. Bei Wischblättern mit federelastischen Tragelementen reicht diese Dämpfung jedoch nicht immer aus. Insbesondere bei sehr langen Wischblättern wirkt das Umklappgeräusch störend.

Aus der JP 61 0852 451 A ist eine Wischleiste bekannt, bei der ein Umlegkeil über einen Kippsteg mit einem Wischleistenrücken verbunden ist. Zu beiden Seiten des Kippstegs sind zwischen dem Umlegkeil und dem Wischleistenrücken Längsnuten gebildet. An den Längsseiten des Umlegkeils sind Lippen vorgesehen, die in Längsrichtung der Wischleiste verlaufen und zum Wischleistenrücken gerichtet sind. Die Lippen dämpfen in den Umkehrlagen des Wischblatts die Geräusche, die durch den Anlagewechsel des Umlegkeils entstehen. Bei einer Ausführung befinden sich die Lippen in Verlängerung der Außenseiten des Umlegkeils und sind an der dem Wischleistenrücken zugewandten Seite mit diesem stoffschlüssig verbunden. Durch die Lippen werden die Längsnuten zu den Außenseiten hin geschlossen.

### Vorteile der Erfindung

Das Wischblatt mit den Merkmalen des Hauptanspruches hat den Vorteil, dass die seitlich vom Kippsteg angeordneten zusätzlichen Stege den Umlegevorgang kontinuierlich dämpfen, indem sie auf den Umlegkeil mit steigender Schräglage eine erhöhte Druckkraft auf der einen Seite bzw. eine erhöhte Zugkraft auf der anderen Seite ausüben. Damit wird zum einen, wie gewünscht, verhindert, dass die Schulter des Umlegkeils mit voller Geschwindigkeit gegen die Schulter des Wischleistenrückens prallt, womit das störende Umklappgeräusch effektiv verhindert werden kann, zum anderen bewirkt die ständige Kraft auf den sich in der Schlepplage befindenden Umlegkeil, dass das Umlegen als solches am Wendepunkt sicher stattfindet. Insbesondere bei Wischblättern, die bereits längere Zeit Umwelteinflüssen ausgesetzt waren, kann es hier bisweilen zu Problemen kommen.

Ferner hat es sich gezeigt, dass die partielle Unterbrechung der sich links und rechts neben dem Kippsteg befindenden Nuten durch die Stege die Wintertauglichkeit des Wischblatts verbessert, weil Eis und Schnee effektiver durch die Bewegung des Wischblatts aus den Nuten herausgearbeitet werden können. Es wird außerdem die Herstellbarkeit des Wischblatts beziehungsweise des Wischblattgummis verbessert, wenn die Stege senkrecht zum Kippsteg angeordnet sind

Durch die in den Unteransprüchen aufgeführten Merkmale sind vorteilhafte Weiterbildungen des Wischblatts nach dem Hauptanspruch möglich..

Durch die Anordnung der Stege auf beiden Seiten des Kippstegs wird gewährleistet, dass sowohl in der Aufwärts- als auch der Abwärtsbewegung die vorgesehene Schlepplage erreicht und Wischqualität gleichermaßen gut wird. Werden die Stege auf den beiden Seiten versetzt angeordnet, verteilen sich die Kräfte entlang des Kippstegs gleichmäßig. Ferner werden möglichen, durch ungünstige Windverhältnisse entstehenden Resonanzen, entgegengewirkt. Es hat sich dabei ein Abstand der Stege voneinander zwischen 10 mm und 50 mm als optimal herausgestellt.

Die Stege können dann in nicht allzu großen Abständen angeordnet werden, wenn die Dicke der Stege kleiner ist als die Dicke des Kippstegs. Auf diese Weise ist sichergestellt, dass das Kippen des Umlegkeils tatsächlich entlang der ganzen Federleiste erfolgt.

In der einfachsten Form, die auch in der Herstellung günstig ist, verbinden die Stege eine Außenkante des Wischleistenkörpers mit einer Außenkante des Umlegkeils in gerader Linie. Auf die Federkennlinie der Stege kann dahingehend Einfluss genommen werden, dass diese gerade Linie beispielsweise als Hohlkehle ausgebildet wird oder die Stege schräg in die Nuten verlaufen. Durch diese Formen kann auch auf Windgeräusche reagiert werden, die entstehen, wenn während der Fahrt der Fahrtwind an den Nuten entlang strömt und von den Außenseiten der Stege beeinflusst wird. Ferner kann durch die Form diese Linie - gerade, gebogen, nach oben oder nach unten schräg - der zeitliche Verlauf der Krafteinwirkung der Stege auf den Umlegkeil während des Umlegens beeinflusst werden.

### Zeichnung

In der Zeichnung zeigen
Figur 1 ein nach dem erfindungsgemäßen Verfahren hergestelltes Wischblatt in perspektivischer Darstellung mit strichpunktiert angedeutetem Wischerarm,
Figur 2 eine gegenüber Fig. 1 vergrößert dargestellte Wischleiste mit angedeutetem Tragelement,
Figur 3 einen Schnitt entlang der Linie III-III in Figur 2,
Figur 4 eine Variante nach Figur 3,
Figur 5 eine Ansicht entlang des Pfeils V in Figur 2,
Figur 6 eine Variante der Einzelheit VI in Figur 5,
Figur 7 eine Variante zu Figur 6,
Fig. 8 eine Ausführung nach dem Stand der Technikund
Figur 9 weitere Varianten zu Figur 1.

### Beschreibung der Ausführungsbeispiele

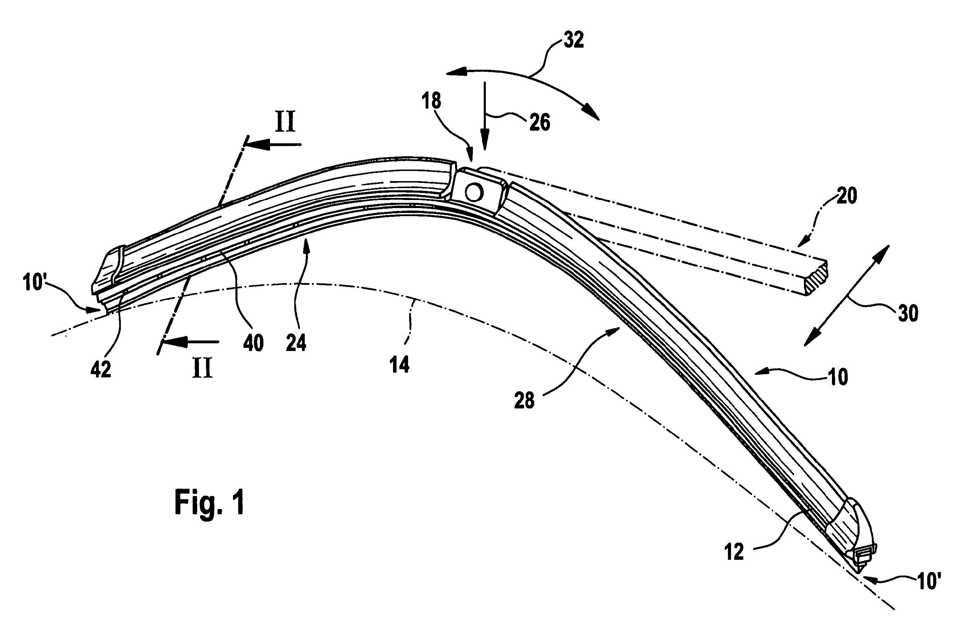

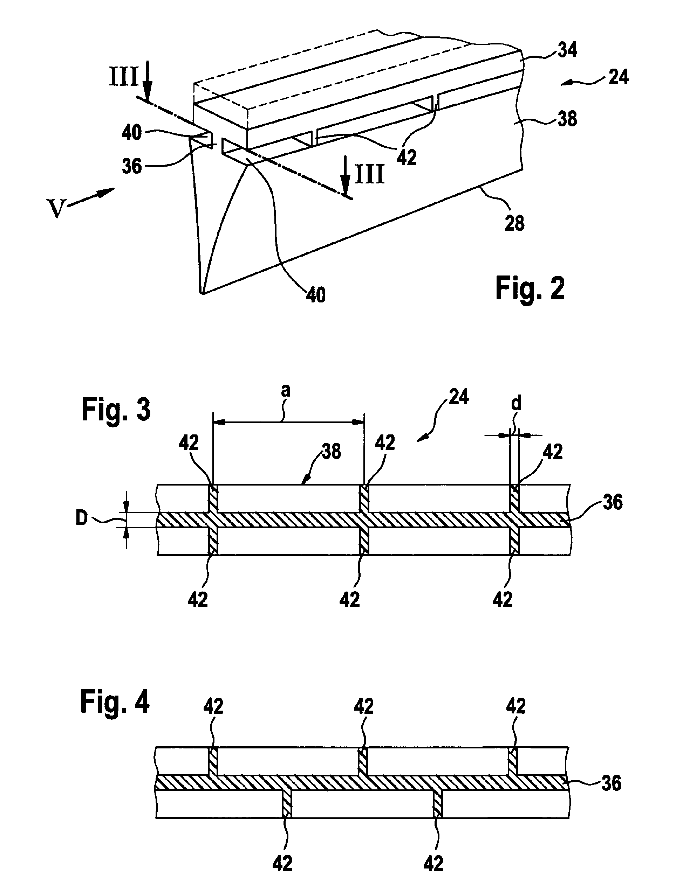

Ein in Fig. 1 dargestelltes Wischblatt 10 weist ein bandartig lang gestrecktes, federelastisches, ein- oder mehrteiliges Tragelement 12 auf, welches in unbelastetem Zustand in Längsrichtung gekrümmt ist. An der von der zu wischenden Scheibe 14 abgewandten konvexen oberen bzw. äußeren Bandseite 16 (Figuren 1 und 2) des Tragelements ist in dessen Mittelabschnitt eine beispielsweise flächig an dieser anliegenden Anschlussvorrichtung 18 angeordnet, mit deren Hilfe das Wischblatt 10 mit einem an der Karosserie eines Kraftfahrzeugs geführten, angetriebenen Wischerarm 20 lösbar verbunden werden kann. An der der Scheibe zugewandten konkaven unteren bzw. inneren Bandfläche oder Bandseite 22 des gekrümmten Tragelements 12 ist eine lang gestreckte, gummielastische Wischleiste 24 angeordnet, die sich längsachsparallel zum Tragelement 12 erstreckt. An dem freien Ende des Wischerarms sind nicht näher dargestellte Gegenanschlussmittel vorgesehen, welche mit der Anschlussvorrichtung 18 des Wischblatts im Sinne eines Gelenks zusammenwirken.

Der Wischerarm 20 und damit auch das Wischblatt 10 sind in Richtung des Pfeiles 26 zur zu wischenden Scheibe belastet, deren zu wischende Oberfläche in Fig. 1 durch die strichpunktierte Linie 14 angedeutet ist. Da die strichpunktierte Linie die stärkste Krümmung der Scheibenoberfläche darstellen soll, ist klar ersichtlich, dass die Krümmung des mit seinen Enden 10' an der Scheibe 14 anliegenden, noch unbelasteten Wischblatts 10 stärker ist als die maximale Scheibenkrümmung. Es hat - unbelastet also gegenüber der Scheibe einen konkaven Verlauf. Unter dem Anpressdruck (Pfeil 26) legt sich das Wischblatt 10 mit seiner die Wischarbeit verrichtende Wischlippe 28 über seine gesamte Länge an der Scheibenoberfläche 14 an und geht in eine der Strecklage angenäherte Arbeitslage über. Dabei baut sich im bandartigen, federelastischen Tragelement 12 eine Spannung auf, welche für eine ordnungsgemäße Anlage der Wischleiste 24 bzw. deren Wischlippe 28 über deren gesamte Länge an der Kraftfahrzeugscheibe 14 sorgt. Weil die in aller Regel sphärisch gekrümmte Scheibe nicht einen Abschnitt einer Kugeloberfläche darstellt, muss sich das Wischblatt 10 gegenüber dem Wischerarm 20 während seiner Wischbewegung (Doppelpfeil 30) ständig der jeweiligen Lage und dem Verlauf der Scheibenoberfläche 14 anpassen können. Deshalb ist die eine Schwingbewegung (Doppelpfeil 32) um die Gelenkachse der Anschlussverbindung ermöglichende gelenkige Verbindung zwischen Wischerarm 20 und Wischblatt 10 notwendig.

Die in Figur 2 dargestellte Wischleiste 24 weist einen Wischleistenrücken 34 auf, der über einen Kippsteg 36 mit einem Umlegkeil 38 verbunden ist, an dessen Unterseite die Wischlippe 28 angeordnet ist. Seitlich des Kippstegs 36 erstrecken sich zwei Längsnuten 40, deren Oberseiten vom Wischleistenrücken 34 und deren Unterseite vom Umlegkeil 38 gebildet sind. Innerhalb der Längsnuten 40 sind, verteilt über die Länge der Längsnuten 40, Stege 42 vorgesehen, die seitlich vom Kippsteg 36 angeordnet sind.

Jeder Steg 42 erstreckt sich vom Kippsteg 36 ausgehend seitlich in Richtung zur offenen Seite der Längsnut 40 und verbindet den Wischleistenrücken 34 mit dem Umlegkeil 38. Die Stege 42 sind Teil der Wischleiste 24 und deshalb stoffschlüssig mit dem Wischleistenrücken 34, dem Kippsteg 36 sowie dem Umlegkeil 38 verbunden.

In Figur 3 ist zu erkennen, dass sich jeder Steg 42 vom Kippsteg 36 ausgehend senkrecht zum Kippsteg 36 erstreckt. Ferner ist erkennbar, dass die Stege 42 beidseitig zum Kippsteg 36 angeordnet sind. Sind die Stege 42 der Figur 3 zu beiden Seiten des Kippstegs 36 fluchtend angeordnet, so zeigt Figur 4 die Stege 42 der beiden Seiten jeweils versetzt angeordnet.

Der Abstand a der Stege 42 zueinander soll zwischen 10 mm und 50 mm betragen und liegt vorzugsweise bei 20 mm. Im Falle der versetzt angeordneten Stege 42 nach Figur 4 ergibt sich dann ein Abstand von jeweils 10 mm, wenn man die Stege 42 zu beiden Seiten des Kippstegs 36 betrachtet. Über die Länge der Wischleiste 24 sind die Stege 42 gleichmäßig verteilt. Es ist jedoch auch denkbar, z. B. aus Resonanzgründen, den Abstand a über die Länge der Wischleiste 24 zu variieren.

Der Kippsteg 36 stellt die eigentliche Wirkverbindung zwischen dem Wischleistenrücken 34 und dem Umlegkeil 38 dar und muss dementsprechend dimensionierten werden. Die Stege 42 sind in ihrer Dicke d kleiner gehalten, als die Dicke D des Kippstegs 36. In einer bevorzugten Ausführungsform beträgt die Dicke d der Stege 42 die Hälfte der Dicke D des Kippstegs 36.

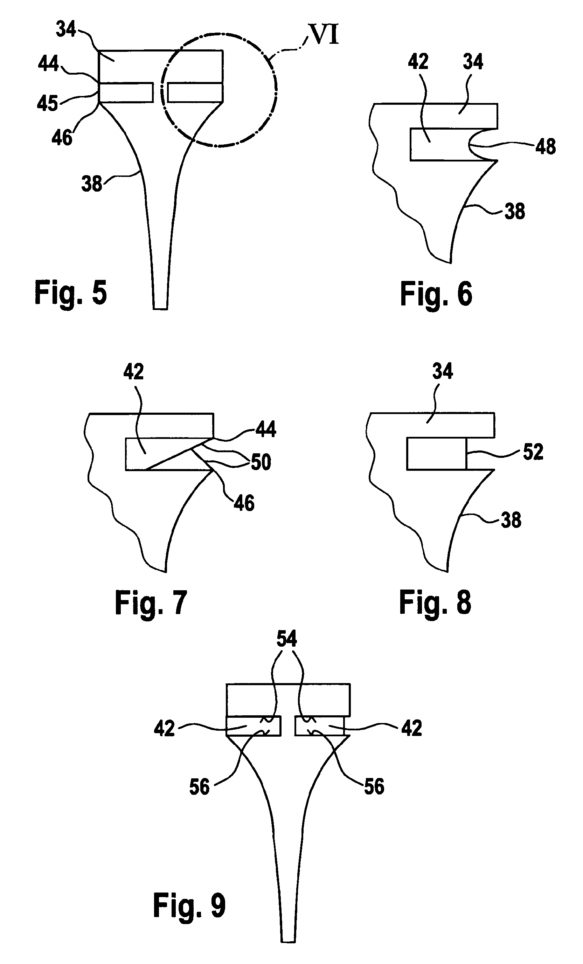

Wie erwähnt, stellen die Stege 42 eine Verbindung zwischen dem Wischleistenrücken 34 und dem Umlegkeil 38 dar und erstrecken sich ausgehend vom Kippsteg 36 zu jeweils einer offenen Seite der Längsnuten 40. Dabei ist klar, dass es aus Fertigungsgründen sinnvoll ist, die Stege 42 mit dem Kippsteg 36 zu verbinden. Denkbar wäre jedoch auch, zwischen den Stegen 42 und dem Kippsteg 36 eine Lücke zu belassen. Ähnlich verhält es sich mit den offenen Seiten der Längsnuten 40. Die Stege 42 verbinden eine Außenkante 44 des Wischleistenrückens 34 in einer geraden Linie 45 mit einer Außenkante 46 des Umlegkeils 38, wie das in Figur 5 dargestellt ist.

In den Figuren 6 und 7 sind hierzu Varianten dargestellt. In Figur 6 ist die Verbindung der beiden Außenkante 44 und 46 in der Form einer Hohlkehle 48 ausgebildet, was den Vorteil einer geringen Kerbwirkung hat. Das in Figur 7 gezeigte Beispiel ist eins von drei Varianten. Die Außenseiten 50 der Stege 42 verlaufen schräg und sind nur mit einer der Außenkanten 44 oder 46 verbunden. Es besteht dabei die Möglichkeit, alle Stege 42 von der Außenkante 44 oder von der Außenkante 46 ausgehend schräg in die Längsnut 40 hinein verlaufend auszugestalten oder aber jeweils im Wechsel von der Außenkante 44 bzw. der Außenkante 46.

Das Ziel, das Umklappgeräusch des Wischblatts 10 zu verringern oder gar zu eliminieren wird mit jeder der Varianten nach den Figuren 5 bis 8 erreicht. Durch die entsprechende Ausbildung der Außenseiten der Stege 42 ist es möglich, auf unterschiedliche Anforderungen zu reagieren. Wesentlich ist, dass die den Stegen 42 zuzuordnende Federkennlinie stark durch die Form der Außenseiten beeinflusst werden kann. Sie kann beispielsweise steiler oder flacher ausgebildet werden oder einen degressiven bzw. progressiven Verlauf aufweisen. Es ist auch denkbar, unterschiedliche Formen der Außenseiten der Stege 42 miteinander zu kombinieren. Dies kann bei aufeinander folgenden Stegen 42 erfolgen oder auch innerhalb eines Steges 42 an dessen Außenkante.

In Figur 9 ist dargestellt, dass die Stege 42 jeweils nur an einer Seite 54 beziehungsweise 56 angeformt sind, an der gegenüberliegenden Seite 56 bzw. 54 jedoch nur anliegen oder gar einen kleinen Abstand aufweisen. Die Ausbildung kann auch so getroffen sein, dass aufeinander folgende Stege 42 alternierend an ihrer oberen Seite 54 und an ihrer unteren Seite 56 angeformt und an der gegenüberliegenden Seite jeweils frei sind. Auf diese Weise ist es möglich, dass zwar durch die Stege 42 ausgehend vom Wischleistenrücken 34 eine Druckkraft auf den Umlegkeil 38 ausgeübt wird, eine Zugkraft aber unterbleibt.

Es ist klar, dass bei Wischblättern 10 mit mehreren übereinander angeordneten Kippstegen 36 jedem der Kippstege 36 entsprechende Stege 42 zugeordnet werden können. Auch bei diesen höher bauenden Wischblättern ist es damit möglich, positiven Einfluss auf das Umklappgeräusch zu nehmen.

## Patentansprüche

1. Wischblatt (10) mit einem bandartig langgestreckten, federelastischen, ein- oder mehrteiligen Tragelement (12), welches in unbelastetem Zustand in Längsrichtung gekrümmt und an dessen konvexen oberen Bandseite (16) in dessen Mittelabschnitt eine beispielsweise flächig an dieser anliegenden Anschlussvorrichtung (18) zum lösbaren Verbinden mit einem angetriebenen Wischerarm (20) angeordnet ist, und an deren konkaven unteren Bandseite (22) eine langgestreckte, gummielastische Wischleiste (24) angeordnet ist, die sich längsachsparallel zum Tragelement (12) erstreckt und die einen Umlegkeil (38) und einen Wischleistenrücken (34) umfasst, die über einen Kippsteg (36) miteinander verbunden sind, **dadurch gekennzeichnet, dass** in einer Längsnut (40) seitlich vom Kippsteg (36) zusätzliche Stege (42) angeordnet sind, die sich ausgehend vom Kippsteg (36) senkrecht zu diesem zur offenen Seite der Längsnut (40) erstrecken, mit ihren Außenseiten (50) mindestens an eine der Außenkanten (44, 46) des Wischleistenrückens (34) oder des Umlegkeils (38)reichen und den Wischleistenrücken (34) mit dem Umlegkeil (38) verbinden.

2. Wischblatt (10) nach einem der vorhergehenden Ansprüche, **dadurch gekennzeichnet, dass** die Stege (42) beidseitig vom Kippsteg (36) angeordnet sind.

3. Wischblatt (10) nach Anspruch 2, **dadurch gekennzeichnet, dass** sich die Stege (42) auf den beiden Seiten gegenüberliegen.

4. Wischblatt (10) nach Anspruch 2, **dadurch gekennzeichnet, dass** die Stege (42) auf den beiden Seiten versetzt zueinander angeordnet sind.

5. Wischblatt (10) nach einem der vorhergehenden Ansprüche, **dadurch gekennzeichnet, dass** der Abstand (a) der Stege (42) voneinander zwischen 10 mm und 50 mm beträgt.

6. Wischblatt (10) nach einem der vorhergehenden Ansprüche, **dadurch gekennzeichnet, dass** die Dicke (d) der Stege (42) kleiner ist als die Dicke (D) des Kippstegs (36).

7. Wischblatt (10) nach einem der vorhergehenden Ansprüche, **dadurch gekennzeichnet, dass** die Stege (42) eine Außenkante (44) des Wischleistenrückens (34) und eine Außenkante (46) des Umlegkeils (38) mit einer geraden Linie (45) verbinden.

8. Wischblatt (10) nach einem der Ansprüche 1 bis 6, **dadurch gekennzeichnet, dass** die Stege (42) eine Außenkante (44) des Wischleistenrückens (34) und eine Außenkante (46) des Umlegkeils (38) mit einer Hohlkehle (48) verbinden.

9. Wischblatt (10) nach einem der Ansprüche 1 bis 6, **dadurch gekennzeichnet, dass** die Stege (42) an ihren Außenseiten (50) angeschrägt sind.

10. Wischblatt (10) nach Anspruch 9, **dadurch gekennzeichnet, dass** sich die Schrägen der Außenseiten (50) jeweils aufeinander folgender Stege (42) von außen oben bzw. von außen unten jeweils nach innen abwechseln.

## Claims

1. Wiper blade (10) with a spring-elastic, single- or multi-part supporting element (12) which is elongated in the manner of a band and, in the unloaded state, curves in the longitudinal direction and on the convex, upper band side (16) of which, in the central section thereof, a connecting device (18) is arranged, the connecting device bearing, for example, in a sheetlike manner against said band side and being intended for the releasable connection to a driven wiper arm (20), and along the concave, lower band side (22) of which supporting element there is arranged an elongated, rubber-elastic wiper strip (24) which extends parallel to the longitudinal axis of the supporting element (12) and which comprises a folding wedge (38) and a wiper strip rear (34) which are connected to each other via a tilting web (36), **characterized in that** additional webs (42) are arranged to the side of the tilting web (36) in a longitudinal groove (40), said webs, starting from the tilting web (36), extending perpendicularly thereto to the open side of the longitudinal groove (40), and reaching with their outer sides (50) at least to one of the outer edges (44, 46) of the wiper strip rear (34) or of the folding wedge (38) and connecting the wiper strip rear (34) to the folding wedge (38).

2. Wiper blade (10) according to Claim 1, **characterized in that** the webs (42) are arranged on both sides of the tilting web (36).

3. Wiper blade (10) according to Claim 2, **characterized in that** the webs (42) lie opposite each other on both sides.

4. Wiper blade (10) according to Claim 2, **characterized in that** the webs (42) are offset with respect to each other on both sides.

5. Wiper blade (10) according to one of the preceding claims, **characterized in that** the distance (a) of the webs (42) from each other is between 10 mm and 50 mm.

6. Wiper blade (10) according to one of the preceding claims, **characterized in that** the thickness (d) of the webs (42) is smaller than the thickness (D) of the tilting web (36).

7. Wiper blade (10) according to one of the preceding claims, **characterized in that** the webs (42) connect an outer edge (44) of the wiper strip rear (34) and an outer edge (46) of the folding wedge (38) to a straight line (45).

8. Wiper blade (10) according to one of Claims 1 to 6, **characterized in that** the webs (42) connect an outer edge (44) of the wiper strip rear (34) and an outer edge (46) of the folding wedge (38) to a concave moulding (48).

9. Wiper blade (10) according to one of Claims 1 to 6, **characterized in that** the outer sides (50) of the webs (42) are bevelled.

10. Wiper blade (10) according to Claim 9, **characterized in that** the slopes of the outer sides (50) of respectively consecutive webs (42) alternate in each case inwards from the outside at the top or from the outside at the bottom.

## Revendications

1. Balai d'essuie-glace (10) comprenant un élément de support (12) en une ou plusieurs parties, élastique à ressort et étiré en longueur sous forme de bande, qui est courbé dans la direction longitudinale dans l'état non sollicité et sur le côté convexe supérieur de bande (16) duquel, dans sa portion centrale, est disposé un dispositif de raccordement (18) s'appliquant par exemple à plat contre lui, pour la connexion amovible à un bras d'essuie-glace entraîné (20), et sur le côté concave inférieur de bande (22) duquel est disposée une raclette d'essuie-glace (24) en caoutchouc élastomère, étirée en longueur, qui s'étend avec son axe longitudinal parallèle à l'élément de support (12) et qui comprend une cale rabattable (38) et un dos de raclette d'essuie-glace (34), qui sont connectés l'un à l'autre par le biais d'une nervure basculante (36), **caractérisé en ce que** dans une rainure longitudinale (40), latéralement par rapport à la nervure basculante (36), sont disposées des nervures supplémentaires (42) qui s'étendent à partir de la nervure basculante (36) perpendiculairement à celle-ci vers le côté ouverte de la rainure longitudinale (40), s'étendent avec leurs côtés extérieurs (50) au moins jusqu'à l'une des arêtes extérieures (44, 46) du dos de la raclette d'essuie-glace (34) ou de la cale rabattable (38) et qui relient le dos de la raclette d'essuie-glace (34) à la cale rabattable (38).

2. Balai d'essuie-glace (10) selon la revendication 1, **caractérisé en ce que** les nervures (42) sont disposées de part et d'autre de la nervure basculante (36).

3. Balai d'essuie-glace (10) selon la revendication 2, **caractérisé en ce que** les nervures (42) des deux côtés sont en regard.

4. Balai d'essuie-glace (10) selon la revendication 2, **caractérisé en ce que** les nervures (42) des deux côtés sont disposées de manière décalée les unes par rapport aux autres.

5. Balai d'essuie-glace (10) selon l'une quelconque des revendications précédentes, **caractérisé en ce que** la distance (a) entre les nervures (42) est comprise entre 10 mm et 50 mm.

6. Balai d'essuie-glace (10) selon l'une quelconque des revendications précédentes, **caractérisé en ce que** l'épaisseur (d) des nervures (42) est inférieure à l'épaisseur (D) de la nervure basculante (36).

7. Balai d'essuie-glace (10) selon l'une quelconque des revendications précédentes, **caractérisé en ce que** les nervures (42) relient une arête extérieure (44) du dos de la raclette d'essuie-glace (34) à une arête extérieure (46) de la cale rabattable (38) en ligne droite (45).

8. Balai d'essuie-glace (10) selon l'une quelconque des revendications 1 à 6, **caractérisé en ce que** les nervures (42) relient une arête extérieure (44) du dos de la raclette d'essuie-glace (34) à une arête extérieure (46) de la cale rabattable (38) avec une goulotte (48).

9. Balai d'essuie-glace (10) selon l'une quelconque des revendications 1 à 6, **caractérisé en ce que** les nervures (42) sont biseautées au niveau de leurs côtés extérieurs (50).

10. Balai d'essuie-glace (10) selon la revendication 9, **caractérisé en ce que** les biseaux des côtés extérieurs (50) de nervures respectivement successives (42) sont alternés vers l'intérieur à chaque fois depuis l'extérieur et le haut, ou depuis l'extérieur et le bas.
